# EUROPÄISCHE PATENTANMELDUNG

(11) **EP 2 189 701 A1**
(43) Veröffentlichungstag der Anmeldung: **26.05.2010**
(21) Anmeldenummer: 08020347.4
(22) Anmeldetag: 22.11.2008
(51) Int. Cl.: F16L 25/00, E04G 15/06, F16L 3/12

(54) **Verbindungselement für Lüftungsrohre**

(71) Anmelder: Martinovic, Danijel, 8604 Volketswil (CH)
(72) Erfinder: Martinovic, Danijel, 8604 Volketswil (CH)
(74) Vertreter: Frei Patent Attorneys

(57) **Zusammenfassung**

Ein Verbindungselement (1) für Lüftungsrohre weist einen zylindrischen Rohrabschnitt (2) und mindestens einen Flansch (3) zur Befestigung des Verbindungselements (1) an einer Fläche (10) an einem ersten Ende des Rohrabschnittes auf, sowie mindestens einen radial in die Innenseite des Rohrabschnittes hineinragenden Anschlag (4) zur Begrenzung der Bewegung eines eingeführten Lüftungsrohres, und radial in die Innenseite des Rohrabschnittes (2) hineinragende Halteelemente (5, 6) zum einrastenden Festhalten eines eingeführten Lüftungsrohres.

## Beschreibung

Die Erfindung bezieht sich auf das Gebiet der Lüftungsinstallationen und insbesondere ein Verbindungselement für Lüftungsrohre und ein Verfahren zum Herstellen einer Rohrverbindung im Lüftungsanlagenbau gemäss dem Oberbegriff der entsprechenden unabhängigen Patentansprüche.

### STAND DER TECHNIK

Aktive Lüftungen gewinnen zusehends an Verbreitung. Dabei werden einerseits starre Rohre und andererseits flexible Rohre aus Kunststoff oder auch Aluminium eingesetzt. Solche Kunststoffrohre mit normierten Durchmessern von typischerweise 6 bis 24 cm weisen eine gerippte Wand auf. Beim Einbau werden die Lüftungsrohre oft abschnittsweise in Beton eingegossen. Dazu werden die Rohre in der Schalung verlegt, und beim Übergang in einen freien Raum durch ein Loch in der Schalung geführt. Nach dem Betonieren wird die Schalung entfernt, so dass die Rohre aus der Betonoberfläche herausragen. Nun können weitere Rohre zur Verlängerung oder Verteilkästen an die herausragenden Rohre angeschlossen werden. Das bekannte Verfahren hat den Nachteil, dass beim Entfernen der Schalung die Lüftungsrohre beschädige oder abgerissen werden können. Zudem sind Verbindungen zu Verlängerungsrohren in der Regel nicht stark auf Zug belastbar, so dass sie sich im Verlaufe der Bauarbeiten wieder lösen können.

### DARSTELLUNG DER ERFINDUNG

Es ist deshalb Aufgabe der Erfindung, eine Verbindungselement für Lüftungsrohre und ein Verfahren zum Herstellen einer Rohrverbindung im Lüftungsanlagenbau der eingangs genannten Art zu schaffen, welche die oben genannten Nachteile beheben.

Diese Aufgabe lösen ein Verbindungselement für Lüftungsrohre und ein Verfahren zum Herstellen einer Rohrverbindung im Lüftungsanlagenbau mit den Merkmalen der entsprechenden unabhängigen Patentansprüche.

Das Verfahren zum Herstellen einer Rohrverbindung für eine Lüftungsanlage weist also die folgenden Schritte auf:
- Befestigen eines Anschlussstutzens an der Innenseite einer Schalung;
- Einstecken eines ersten Lüftungsrohres in den Anschlussstutzen und Verlegen des ersten Lüftungsrohres innerhalb der Schalung;
- Einbringen und Abbinden des Betons;
- Enfernen der Schalung, wobei der Anschlussstutzen im Beton verbleibt;
- Einstecken eines zweiten Lüftungsrohres in den Anschlussstutzen.

Dadurch wird verhindert, dass aus dem Beton herausragende Rohrteile beim Entfernen der Schalung beschädigt werden. Weiter bildet der Anschlussstutzen die Möglichkeit einer zuverlässig, schnell und werkzeugfrei herstellbaren Verbindung zu einem weiterführenden Lüftungsrohr.

Das Befestigen des Anschlussstutzens an der Innenseite der Schalung geschieht vorzugsweise durch Befestigungsmittel wie Nägel oder Agraffen. Dazu weist der Flansch vorzugsweise am Umfang verteilte Löcher oder mindestens Markierungen zum Nageln auf. Es können bei einem Metallflansch als Befestigungsmittel auch beispielsweise dreieckige Stücke ausgestanzt sein, welche senkrecht zum Flansch stehen und zum Befestigung des Flansches in eine Schaltafel geschlagen werden können.

Beim Entfernen der Schalung werden die Befestigungsmittel aus der Schalung gezogen. Anschliessend können sie abgebogen oder abgeschnitten werden.

Das Verbindungselement für Lüftungsrohre weist einen zylindrischen Rohrabschnitt und mindestens einen Flansch zur Befestigung des Verbindungselements an einer Fläche an einem ersten Ende des Rohrabschnittes auf, sowie mindestens einen radial in die Innenseite des Rohrabschnittes hineinragenden Anschlag zur Begrenzung der Bewegung eines in den Rohrabschnitt eingeführten Lüftungsrohres, und radial in die Innenseite des Rohrabschnittes hineinragende Halteelemente zum einrastenden Festhalten eines in den Rohrabschnitt eingeführten Lüftungsrohres. Die Halteelemente wie auch die Verbindungselemente als Ganzes sind entsprechend den Massen von standardmässigen Lüftungsrohren (typischerweise aus Kunststoff) dimensioniert. Dadurch rasten die Haltelemente beim Einstecken eines gerippten Lüftungsrohres an den Rippen des Lüftungsrohres ein. Die Haltelemente können aber auch auf glatte Lüftungsrohre ausgelegt sein und solche Lüftungsrohre nach dem Einstecken durch leichtes Zusammendrücken festhalten.

Damit wird es möglich, eine Verbindung auf einfache Weise gemäss dem beschriebenen Verfahren herzustellen. Die eingesteckten Lüftungsrohre können während weiterer Bauarbeiten im Verbindungselement steckengelassen werden, ohne dass sie herausfallen.

Das Verbindungselement ist vorzugsweise aus Metallblech oder aus Kunststoff gefertigt. Im ersten Fall sind der Anschlag und/oder mindestens eines der Halteelemente durch jeweils mindestens eine am Rohrabschnitt durch Umformen hergestellte Vertiefung gebildet. Dies können mehrere einzelne, um den Umfang des Rohrabschnittes verteilte und nach innen ragende Vertiefungen sein, oder aber Sicken, also um den Umfang umlaufende Vertiefungen, was die Herstellung besonders vereinfacht. Diese dienen zusätzlich zur Versteifung des Rohres.

Ist das Verbindungselement aus Kunststoff, so ist mindestens eines der Halteelemente und/oder der Anschlag durch jeweils mindestens einen am Rohrabschnitt ausgeformten und nach innen weisenden Vorsprung gebildet. Auch hier können jeweils mehrere entlang des Umfanges verteilte Vorsprünge oder eine um den Umfang umlaufende, nach innen weisende Rippe vorliegen.

Der Flansch weist vorzugsweise Löcher zur Befestigung des Verbindungselementes, vorzugsweise durch Nageln, an einer flachen Platte auf.

Das Verbindungselement kann anstelle eines geraden Rohres auch ein abgewinkeltes Rohr aufweisen. Damit kann auch bei engen Platzverhältnissen eine Umlenkung der Lüftungsleitung erreicht werden. Der sonstige Aufbau ist sinngemäss wie bei der geraden Variante, jedoch liegen zwei Anschläge vor, um zu verhindern, dass die Lüftungsrohre in den Winkel hineinragen. Natürlich kann die Erfindung auch mit beliebigen Winkeln zwischen den beiden Enden des Rohres realisiert werden.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine perspektivische Ansicht eines Verbindungselements;
- Figur 2: einen Längsschnitt durch ein Verbindungselement;
- Figur 3: eine vorbereitete Rohrverbindung vor dem Betonieren; und
- Figur 4: eine fertige Rohrverbindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

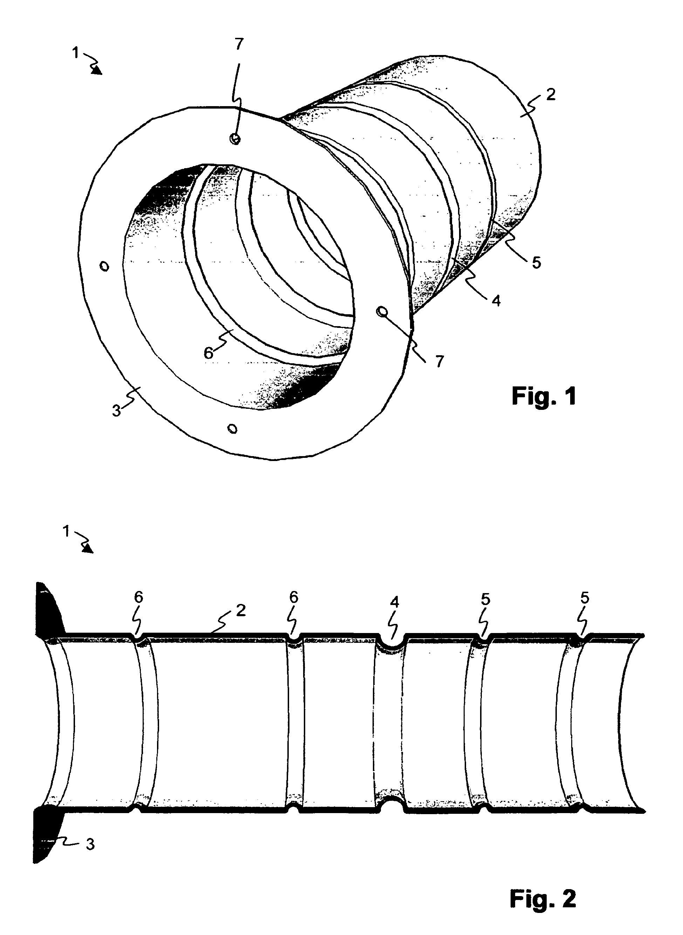

Die **Figuren 1** und **2** zeigen als Verbindungselemente wirkende Anschlussstutzen 1 aus Blech oder Kunststoff in einer Ansicht und im Querschnitt. Die Anschlussstutzen 1 weisen ein Rohr oder einen Rohrabschnitt 2 auf, und einen Flansch 3. Eine Ebene des Flansches 3 liegt typischerweise senkrecht zur Achse des Rohres 2. Um den Umfang des Rohrabschnittes 2 umlaufende Haltelemente 5, 6, hier umlaufende Sicken oder Haltesicken, reichen wenige mm, beispielsweise 1 mm bis 2 mm nach innen und rasten an einem eingesteckten Lüftungsrohr 11, 12 ein Ein Anschlag 4 reicht etwas weiter als die Haltelemente in das Rohr hinein, beispielsweise 2 mm oder 3 mm bis 5 mm so dass ein eingeführtes Lüftungsrohr nicht daran vorbei gestossen werden kann. Der Durchmesser des Rohres 2 beträgt beispielsweise 6, 8, 10, 12 bis 24 cm. Dieser Durchmesser und das Mass, um welches die Haltelemente und der Anschlag vorstehen, richten sich nach gängigen Norm-Rohren. In der **Figur 1** liegt beispielhaft je eine Haltesicke 5, 6 zu beiden Seiten des Anschlags 4, bei der **Figur 2** sind es jeweils zwei Haltesicken 5, 6.

Die Länge des Rohres 2 liegt vorzugsweise annähernd zwischen 16 cm bis 24 cm. Der Anschlag 4 ist vorzugsweise ungefähr in der Mitte der Länge angeordnet. Dadurch resultiert an beiden Seiten eine Einstecktiefe der Lüftungsrohre von jeweils 8 cm bis 12 cm. Die Haltelemente oder Haltesicken 5, 6 sind, wenn, wie in der **Figur 1****,** auf jeder Seite nur eine Haltesicke vorliegt, vorzugsweise näher beim Anschlag als beim jeweiligen Rohrende angeordnet.

In einer anderen bevorzugten Ausführungsform der Erfindung, wie in der **Figur 2****,** sind an jeder Seite des Rohres 2 je zwei Haltesicken 5, 6 angeordnet. Die Abstände zwischen den beiden Haltesicken 5, 6 einer Seite sind dabei beispielsweise derart, dass der Abstand zwischen dem Anschlag 4 und dem jeweiligen Rohrende grob gesehen gedrittelt wird. Es kann aber auch der Abstand zwischen den beiden Haltesicken etwa doppelt so gross wie der Abstand zwischen den Haltesicken und dem Anschlag respektive dem Rohrende sein.

Beim Einsatz wird der Anschlussstutzen, auch Schalungsmuffe genannt, an die Schalung genagelt. Ein Lüftungsrohr, auch Verteilrohr genannt, wird von innen, also im Bereich des zukünftigen Betonkörpers, bis zur Begrenzung in die Schalungsmuffe hineingesteckt. Nach dem Ausschalen wird ein weiteres Lüftungsrohr respektive Verteilrohr von aussen bis zur Begrenzung in die einbetonierte Schalungsmuffe eingesteckt. Durch die resultierende Verbindung der Lüftungsrohre wird der Strömungsquerschnitt der Lüftung nicht beeinträchtigt. Die Lüftungsrohre sind nach dem Einstecken so gut fixiert, das sie nicht zusätzlich befestigt werden müssen. Optional können Dichtungen, z.B. O-Ringe am Anschlussstutzen und/oder an den Lüftungsrohren angeordnet werden, welche nach dem Einstecken der Lüftungsrohre diese bezüglich des Anschlussstutzens abdichten.

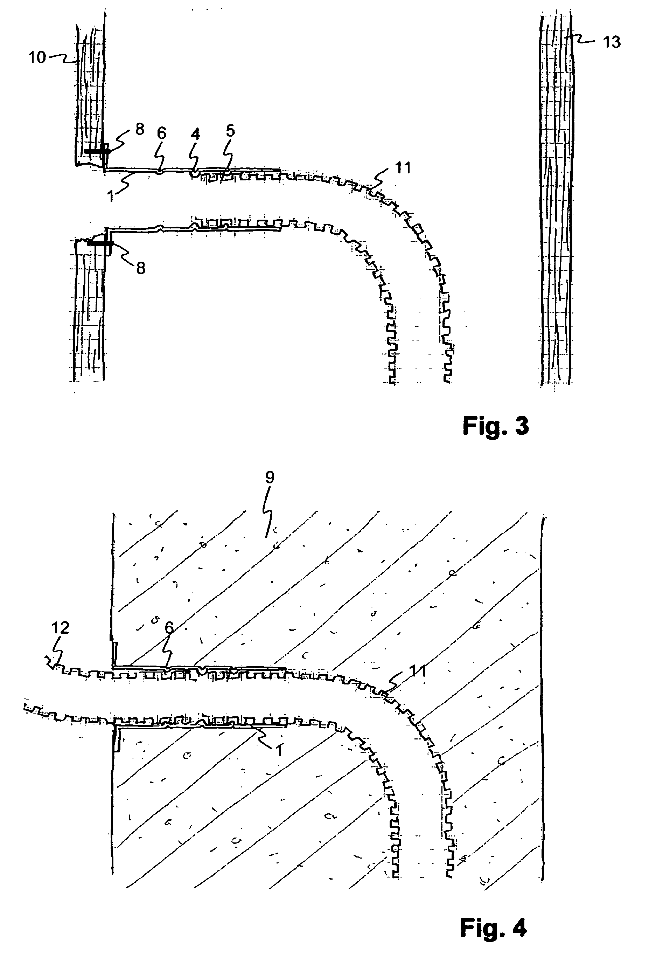

**Figur 3** zeigt eine vorbereitete Rohrverbindung vor dem Betonieren: Der Anschlussstutzen 1 ist mit Nägeln 8 durch den Flansch 3 von innen her gegen eine der Schaltafeln 10, 13 genagelt. Ein erstes Lüftungsrohr 11 ist gegen den Anschlag 4 in das erste oder innere Ende des Anschlussstutzens 1 gestossen und wird durch mindestens eine innere Haltesicke 5 festgehalten respektive vor dem Herausfallen geschützt.

**Figur 4** zeigt eine fertige Rohrverbindung nach dem Einbringen und Abbinden von Beton 9 zwischen die Schaltafeln 10, 13, dem Entfernen der Schaltafeln und der Nägel und dem Einstecken eines zweiten Lüftungsrohrs 12 in das zweite oder äussere Ende des Anschlussstutzens 1. Das zweite Lüftungsrohr 12 wird von mindestens einer äusseren Haltesicke 6 gehalten.

### BEZUGSZEICHENLISTE

- 1: Anschlussstutzen
- 2: Rohr
- 3: Flansch
- 4: Anschlag
- 5: innere Haltesicke
- 6: äussere Haltesicke
- 7: Löcher
- 8: Nägel
- 9: Beton
- 10, 13: Schaltafel
- 11: erstes Lüftungsrohr
- 12: zweites Lüftungsrohr

## Patentansprüche

1. Verbindungselement (1) für Lüftungsrohre, aufweisend einen zylindrischen Rohrabschnitt (2) und mindestens einen Flansch (3) zur Befestigung des Verbindungselements (1) an einer Fläche (10) an einem ersten Ende des Rohrabschnittes, sowie mindestens einen radial in die Innenseite des Rohrabschnittes hineinragenden Anschlag (4) zur Begrenzung der Bewegung eines eingeführten Lüftungsrohres, und radial in die Innenseite des Rohrabschnittes (2) hineinragende Halteelemente (5, 6) zum einrastenden Festhalten eines eingeführten Lüftungsrohres.

2. Verbindungselement (1) gemäss Anspruch 1, wobei mindestens der Rohrabschnitt (2) aus einem Metallblech gefertigt ist.

3. Verbindungselement (1) gemäss Anspruch 2, wobei der Anschlag (4) durch mindestens eine am Rohrabschnitt (2) durch Umformen hergestellte Vertiefung gebildet ist.

4. Verbindungselement (1) gemäss Anspruch 3, wobei der Anschlag (4) durch eine am Rohrabschnitt (2) geformte Sicke gebildet ist.

5. Verbindungselement (1) gemäss einem der Ansprüche 2 bis 4, wobei mindestens eines der Halteelemente (5, 6) durch jeweils mindestens eine am Rohrabschnitt (2) durch Umformen hergestellte Vertiefung gebildet ist. ,

6. Verbindungselement (1) gemäss Anspruch 5, wobei mindestens eines der Halteelemente (5, 6) durch eine am Rohrabschnitt (2) geformte Sicke gebildet ist.

7. Verbindungselement (1) gemäss Anspruch 1, wobei mindestens der Rohrabschnitt (2) aus Kunststoff gefertigt ist.

8. Verbindungselement (1) gemäss Anspruch 7, wobei mindestens eines der Halteelemente (5, 6) durch jeweils mindestens einen am Rohrabschnitt (2) ausgeformten und nach innen weisenden Vorsprung gebildet ist.

9. Verbindungselement (1) gemäss einem der bisherigen Ansprüche, wobei der Flansch (3) Löcher zur vorübergehenden Befestigung des Verbindungselementes (1) an einer flachen Platte aufweist.

10. Verfahren zum Herstellen einer Rohrverbindung im Lüftungsanlagenbau
• Befestigen eines Anschlussstutzens (1) an der Innenseite einer Schalung (10);
• Einstecken eines ersten Lüftungsrohres (11) in ein erstes Ende des Anschlussstutzens (1) und Verlegen des ersten Lüftungsrohres (11) innerhalb der Schalung;
• Einbringen von Beton (9) in die Schalung und Abbinden des Betons (9);
• Enfernen der Schalung (10), wobei der Anschlussstutzen (1) im Beton (9) verbleibt ;
• Einstecken eines zweiten Lüftungsrohres (12) in ein zweites Ende des Anschlussstutzen (1).

11. Verfahren gemäss Anspruch 10, wobei die Lüftungsrohre (11, 12) beim Einstecken in Halteelementen (5, 6) an der Innenseite des Rohrabschnittes (2) einrasten.

12. Verfahren gemäss Anspruch 10 oder 11, wobei beim Einstecken der Lüftungsrohre (11, 12) die Einsteckbewegung durch einen Anschlag (4) an der Innenseite des Rohrabschnittes (2) begrenzt ist.
